# EUROPÄISCHE PATENTSCHRIFT

(11) **EP 4 000 950 B1**
(45) Veröffentlichungstag und Bekanntmachung des Hinweises auf die Patenterteilung: **26.06.2024**
(21) Anmeldenummer: 21205998.4
(22) Anmeldetag: 02.11.2021
(51) Int. Cl.: B60B 27/02, B60B 27/00, B60K 7/00

(54) **RADNABE**
WHEEL HUB
MOYEU DE ROUE

(30) Priorität: 04.11.2020 DE 102020129083
(43) Veröffentlichungstag der Anmeldung: 25.05.2022
(73) Patentinhaber: Porsche eBike Performance GmbH, 85521 Ottobrunn (DE)
(72) Erfinder: Gutmann, Bernhard, 82131 Gauting (DE)
(74) Vertreter: Epping - Hermann - Fischer

(56) Entgegenhaltungen:
- DE-A1-102014 218 644
- DE-A1-102019 134 893
- DE-B3-102019 115 401
- US-A1- 2011 133 542

## Beschreibung

Die Erfindung betrifft eine Radnabe für ein Antriebsrad eines Fahrzeugs, eine Vorrichtung mit der Radnabe und ein Elektrofahrrad mit der Radnabe oder der Vorrichtung.

Ein Elektrofahrrad weist einen Elektromotor auf, der in einer Radnabe eines Antriebsrads angeordnet sein kann. Das Antriebsrad kann beispielsweise das vordere oder hintere Laufrad des Elektrofahrrads sein. Das Elektrofahrrad weist zudem eine Recheneinheit auf, beispielsweise einen Controller, die den Elektromotor steuert. Die Recheneinheit kann zudem ein Anzeigegerät und ein Eingabegerät aufweisen und ist oft an dem Lenker des Elektrofahrrads angebracht, damit der Fahrer in der Recheneinheit gespeicherte Parameter, unter deren Verwendung der Elektromotor gesteuert wird, vor oder während der Fahrt ändern kann. Zum Steuern des Elektromotors und zum Versorgen des Elektromotors mit Strom sind elektrische Leitungen vorzusehen, die den Elektromotor mit der Recheneinheit verbinden. Für die elektrischen Leitungen ist in dem Elektrofahrrad, insbesondere in der Radnabe, ein entsprechender Raum vorzusehen, wobei der Raum umso größer auszuführen ist, je mehr der elektrischen Leitungen vorgesehen sind. Dies betrifft hauptsächlich den Leitungsausgang aus der Radnabe heraus.

Die DE 10 2019 115 401 B3 betrifft eine Radnabe für ein Antriebsrad eines Fahrzeugs, mit einer Radachse, einer Klammer, die eine Außenfläche der Radachse C-förmig umgreift und die verdrehfest gegen die Radachse befestigt ist, einem Magnetfeldsensor, der an der Klammer befestigt ist, und einem Polring, der konzentrisch um die Radachse und in einem Abstand zu dem Magnetfeldsensor angeordnet sowie rotierbar relativ zu der Radachse gelagert ist, wobei der Magnetfeldsensor eingerichtet ist, ein von dem Polring ausgehendes Magnetfeld zu detektieren, so dass auf eine Bewegung des Polrings relativ zu der Radachse zurückschließbar ist.

DE 10 2014 218644 A1 betrifft eine Kettenblattanordnung mit einem Kettenblatt und einer Nabeneinheit, wobei die Nabeneinheit eine fest mit dem Kettenblatt verbundene äußere Nabe und eine darin aufgenommene innere Nabe umfasst, wobei zwischen der äußeren Nabe und der inneren Nabe wenigstens ein Element zum Übertragen eines Drehmoments angeordnet ist, an dem ein Kraft- und/oder Drucksensor zum Erfassen einer zwischen der äußeren Nabe und der inneren Nabe wirkenden Kraft oder eines Drucks angebracht ist.

Aufgabe der Erfindung ist es daher, eine Radnabe zu schaffen, bei der ein Raumbedarf für elektrische Leitungen gering ist.

Die erfindungsgemäße Radnabe für ein Antriebsrad eines Fahrzeugs weist eine Radachse, einen ersten Magnetfeldsensor, der verdrehfest gegen die Radachse befestigt ist, einen ersten Magneten, der in einem Abstand zu dem ersten Magnetfeldsensor angeordnet sowie rotierbar relativ zu der Radachse gelagert ist, wobei der erste Magnetfeldsensor eingerichtet ist, ein von dem ersten Magneten ausgehendes erstes Magnetfeld zu detektieren und ein erstes Magnetfeldsensorsignal auszugeben, das eine zeitabhängige Signalstärke aufweist, die verursacht von einer Ortsverschiebung des ersten Magnetfeldes zwischen einer minimalen Signalstärke und einer maximalen Signalstärke alterniert, einen eine erste Messgröße bestimmenden ersten Sensor, der ein Temperatursensor, der eingerichtet ist, als die erste Messgröße eine Temperatur in der Radnabe zu messen, oder ein Drehmomentsensor ist, der eingerichtet ist, als die erste Messgröße ein Drehmoment in der Radnabe zu messen, und eine erste Signalverarbeitungseinheit auf, die eingerichtet ist, die minimale Signalstärke und/oder die maximale Signalstärke des ersten Magnetfeldsensorsignals in Abhängigkeit von der ersten Messgröße zu verändern und somit aus dem ersten Magnetfeldsensorsignal ein erstes Radnabensignal zu generieren.

Das erste Radnabensignal weist eine Information über die erste Messgröße auf, wobei die Information in der Amplitude der Signalstärke angeordnet ist. Zudem weist das erste Radnabensignal eine Information über die Bewegung des ersten Magneten relativ zu der Radachse auf, wobei sich die Information daraus ergibt, wie oft pro Zeiteinheit die Signalstärke des Radnabensignals zwischen einer minimalen Signalstärke des Radnabensignals, die zu der minimalen Signalstärke des Magnetfeldsensorsignals gehört, und einer maximalen Signalstärke des Radnabensignals, die zu der maximalen Signalstärke des Magnetfeldsensorsignals gehört, alterniert. Damit können mittels nur einer einzelnen elektrischen Leitung zwei Informationen über die Radnabe, nämlich über die erste Messgröße, das heißt über die Temperatur oder über das Drehmoment, und über die Bewegung des ersten Magneten relativ zu der Radachse gleichzeitig übertragen werden. Dadurch ist ein Raumbedarf für elektrische Leitungen gering im Vergleich dazu, wenn für jede der zwei Informationen der Radnabe jeweils eine elektrische Leitung vorgesehen wird.

Dadurch, dass der erste Magnetfeldsensor verdrehfest gegen die Radachse befestigt ist, kann der erste Magnetfeldsensor nicht relativ zu der Radachse rotieren. Beispielsweise kann die Radnabe einen ersten Polring aufweisen, der konzentrisch um die Radachse angeordnet ist und in dem der erste Magnet angeordnet ist. Der erste Polring weist abwechselnd in seiner Umfangsrichtung magnetische Nordpole und magnetische Südpole auf. Prinzipiell kann die Erfindung mit einem einzelnen der Nordpole und einem einzelnen der Südpole ausgeführt werden, wobei die Genauigkeit der Messung der Bewegung des ersten Polrings relativ zu der Radachse jedoch höher ist, wenn eine Mehrzahl der Nordpole und der Südpole vorgesehen ist. In dem Fall, dass der erste Polring vorgesehen ist, kann die Signalstärke zwischen der minimalen Signalstärke und der maximalen Signalstärke alternieren, indem der erste Magnetfeldsensor einen Wechsel des ersten Magnetfeldes von einem Nordpol zu einem Südpol und von einem Südpol zu einem Nordpol detektiert. Alternativ ist denkbar, dass die Signalstärke zwischen der minimalen Signalstärke und der maximalen Signalstärke alterniert, indem der erste Magnetfeldsensor einen Wechsel zwischen einer Anwesenheit und einer Abwesenheit des ersten Magnetfeldes detektiert.

Die Radnabe weist bevorzugt einen Ritzelträger, einen Freilauf, ein Nabengehäuse und einen Übertragungspfad auf, via den in einem Betrieb der Radnabe das Drehmoment von dem Ritzelträger via den Freilauf auf das Nabengehäuse übertragen wird, wobei der erste Magnet verdrehfest gegen den Ritzelträger oder verdrehfest gegen das Nabengehäuse angeordnet ist. Damit rotiert der erste Magnet zusammen mit dem Ritzelträger oder zusammen mit dem Nabengehäuse um die Radachse. Dadurch kann die Drehzahl des Ritzelträgers um die Radachse oder die Drehzahl des Nabengehäuses um die Radachse bestimmt werden.

Die Radnabe weist bevorzugt einen zweiten Magnetfeldsensor, der verdrehfest gegen die Radachse befestigt ist, einen zweiten Magneten, der in einem Abstand zu dem zweiten Magnetfeldsensor angeordnet sowie rotierbar relativ zu der Radachse gelagert ist, wobei der zweite Magnetfeldsensor eingerichtet ist, ein von dem zweiten Magneten ausgehendes zweites Magnetfeld zu detektieren und ein zweites Magnetfeldsensorsignal auszugeben, das eine zeitabhängige Signalstärke aufweist, die verursacht von einer Ortsverschiebung des ersten Magnetfeldes zwischen einer minimalen Signalstärke und einer maximalen Signalstärke alterniert, einen eine zweite Messgröße bestimmenden zweiten Sensor, der in dem Fall, dass der erste Sensor der Drehmomentsensor ist, der Temperatursensor ist, der eingerichtet ist, als die zweite Messgröße die Temperatur in der Radnabe zu messen, und in dem Fall, dass der erste Sensor der Temperatursensor ist, der Drehmomentsensor ist, der eingerichtet ist, als die zweite Messgröße das Drehmoment in der Radnabe zu messen, und eine zweite Signalverarbeitungseinheit auf, die eingerichtet ist, die minimale Signalstärke und/oder die maximale Signalstärke des zweiten Magnetfeldsensorsignals in Abhängigkeit von der zweiten Messgröße zu verändern und somit aus dem zweiten Magnetfeldsensorsignal ein zweites Radnabensignal zu generieren. Dadurch, dass der zweite Magnetfeldsensor verdrehfest gegen die Radachse befestigt ist, kann der zweite Magnetfeldsensor nicht relativ zu Radachse rotieren. Damit können Informationen über die Bewegung des ersten Magneten relativ zu der Radachse, über die Bewegung des zweiten Magneten relativ zu der Radachse, über die Temperatur und über das Drehmoment in nur zwei elektrischen Leitungen übertragen werden, wodurch der Platzbedarf für die elektrischen Leitungen besonders gering ist.

Die Radnabe weist bevorzugt einen Ritzelträger, einen Freilauf, ein Nabengehäuse und einen Übertragungspfad auf, via den in einem Betrieb der Radnabe das Drehmoment von dem Ritzelträger via den Freilauf auf das Nabengehäuse übertragen wird, wobei der erste Magnet verdrehfest gegen den Ritzelträger und der zweite Magnet verdrehfest gegen das Nabengehäuse angeordnet ist. Damit rotiert der erste Magnet zusammen mit dem Ritzelträger um die Radachse und der zweite Magnet zusammen mit dem Nabengehäuse um die Radachse. Dadurch kann die Drehzahl des Ritzelträgers um die Radachse und die Drehzahl des Nabengehäuses um die Radachse bestimmt werden.

Beispielsweise kann die Radnabe einen zweiten Polring aufweisen, der konzentrisch um die Radachse angeordnet ist und in dem der zweite Magnet angeordnet ist. Der zweite Polring weist abwechselnd in seiner Umfangsrichtung magnetische Nordpole und magnetische Südpole auf. Prinzipiell kann die Erfindung mit einem einzelnen der Nordpole und einem einzelnen der Südpole ausgeführt werden, wobei die Genauigkeit der Messung der Bewegung des zweiten Polrings relativ zu der Radachse jedoch höher ist, wenn eine Mehrzahl der Nordpole und der Südpole vorgesehen ist. In dem Fall, dass der zweite Polring vorgesehen ist, kann die Signalstärke zwischen der minimalen Signalstärke und der maximalen Signalstärke alternieren, indem der zweite Magnetfeldsensor einen Wechsel des zweiten Magnetfeldes von einem Nordpol zu einem Südpol und von einem Südpol zu einem Nordpol detektiert. Alternativ ist denkbar, dass die Signalstärke zwischen der minimalen Signalstärke und der maximalen Signalstärke alterniert, indem der zweite Magnetfeldsensor einen Wechsel zwischen einer Anwesenheit und einer Abwesenheit des zweiten Magnetfeldes detektiert.

Es ist bevorzugt, dass die Signalstärke eine elektrische Spannung und/oder eine elektrische Stromstärke ist. Alternativ ist auch denkbar, dass die Signalstärke eine Intensität einer elektromagnetischen Strahlung ist.

Es ist bevorzugt, dass der erste Sensor oder der zweite Sensor der Temperatursensor ist, der ein Widerstandsthermometer aufweist, und die Radnabe einen Spannungsteiler aufweist, der in einem Betrieb der Radnabe in dem Fall, dass der erste Sensor der Temperatursensor ist, von dem ersten Magnetfeldsensorsignal gespeist ist und in dem Fall, dass der zweite Sensor der Temperatursensor ist, von dem zweiten Magnetfeldsensorsignal gespeist ist, wobei einer der ohmschen Widerstände des Spannungsteilers das Widerstandsthermometer ist. Es ist besonders bevorzugt, dass in dem Fall, dass der erste Sensor der Temperatursensor ist, das erste Radnabensignal eine Teilspannung des Spannungsteilers ist oder aus der Teilspannung des Spannungsteilers erzeugt wird und in dem Fall, dass der zweite Sensor der Temperatursensor ist, das zweite Radnabensignal eine Teilspannung des Spannungsteilers ist oder aus der Teilspannung des Spannungsteilers erzeugt wird.

Die erfindungsgemäße Vorrichtung weist die erfindungsgemäße Radnabe oder eine bevorzugte Ausführungsform der erfindungsgemäßen Radnabe und eine Recheneinheit auf, die eingerichtet ist, die erste Messgröße aus dem ersten Radnabensignal zu bestimmen. Zudem ist die Recheneinheit bevorzugt eingerichtet, die zweite Messgröße aus dem zweiten Radnabensignal zu bestimmen.

Es ist bevorzugt, dass die Radnabe einen Elektromotor aufweist und die Recheneinheit eingerichtet ist, den Elektromotor zu steuern.

Die Radnabe weist bevorzugt einen Drehmomentsensor auf, der eingerichtet ist, ein Drehmoment in der Radnabe zu messen. Die Vorrichtung ist bevorzugt eingerichtet, das Drehmoment der Recheneinheit bereitzustellen, die eingerichtet ist, eine von dem Elektromotor aufzunehmende elektrische Leistung Pₐₖₜ unter Verwendung des Drehmoments zu steuern. Es ist dabei denkbar, dass das Drehmoment getrennt von dem ersten Magnetfeldsensorsignal und/oder dem zweiten Magnetfeldsensorsignal an die Recheneinheit übertragen wird.

Alternativ dazu, das Drehmoment getrennt von dem ersten Magnetfeldsensorsignal und/oder dem zweiten Magnetfeldsensorsignal an die Recheneinheit zu übertragen, ist es bevorzugt, dass der erste Sensor der Drehmomentsensor ist und die Recheneinheit eingerichtet ist, das Drehmoment aus dem ersten Radnabensignal zu bestimmen, oder wobei zweite Sensor der Drehmomentsensor ist und die Recheneinheit eingerichtet ist, das Drehmoment aus dem zweiten Radnabensignal zu bestimmen.

Es ist bevorzugt, dass der erste Sensor der Temperatursensor ist und die Recheneinheit eingerichtet ist, die Temperatur aus dem ersten Radnabensignal zu bestimmen, oder wobei der zweite Sensor der Temperatursensor ist und die Recheneinheit eingerichtet ist, die Temperatur aus dem zweiten Radnabensignal zu bestimmen.

Die Recheneinheit ist bevorzugt eingerichtet, eine von dem Elektromotor aufzunehmende elektrische Leistung Pₐₖₜ unter Verwendung der von der Recheneinheit aus dem ersten Radnabensignal oder aus dem zweiten Radnabensignal bestimmten Temperatur zu steuern. Damit ist es möglich, den Elektromotor so zu steuern, dass eine Überhitzung des Elektromotors vermieden werden kann.

Es ist besonders bevorzugt, dass der Elektromotor eine Nennleistung P_{N} hat, die die maximale von dem Elektromotor aufnehmbare elektrische Dauerleistung ist, und die Recheneinheit eingerichtet ist, eine aktuelle Maximalleistung P_{akt,max} zu bestimmen, die eine Obergrenze für die von dem Elektromotor aufzunehmende elektrische Leistung Pₐₖₜ ist, wobei gilt: a) P_{akt,max}=P_{N}, wenn die von der Recheneinheit aus dem Radnabensignal bestimmte Temperatur niedriger als eine erste Temperatur ist, und b) 0<P_{akt,max}<P_{N}, wenn die von der Recheneinheit aus dem Radnabensignal bestimmte Temperatur höher als die erste Temperatur und niedriger als eine zweite Temperatur ist, die höher als die erste Temperatur ist, und c) P_{akt,max}=Pₐₖₜ=0, wenn die von der Recheneinheit aus dem Radnabensignal bestimmte Temperatur höher als die zweite Temperatur ist. Dadurch wird der Elektromotor nicht bei Überschreiten einer Schwellentemperatur abrupt ausgeschaltet, sondern die aktuelle Maximalleistung P_{akt,max} wird bei Überschreiten der ersten Temperatur zuerst abgesenkt, bevor bei Überschreiten der zweiten Temperatur der Elektromotor vollständig ausgeschaltet wird.

Die Recheneinheit ist bevorzugt außerhalb der Radnabe angeordnet. Dadurch ist es vorteilhaft nicht erforderlich, einen Raum für die Recheneinheit in der Radnabe vorzusehen. Zudem kann in dem Fall, dass der Elektromotor vorgesehen ist, die Recheneinheit an einem Ort angeordnet werden, an dem die Recheneinheit vorteilhaft nicht oder nur geringfügig von einer Abwärme des Elektromotors beaufschlagt wird.

Das erfindungsgemäße Elektrofahrrad weist die erfindungsgemäße Radnabe oder eine bevorzugte Ausführungsform der erfindungsgemäßen Radnabe und das Antriebsrad auf, das die Radnabe aufweist. Alternativ weist das erfindungsgemäße Elektrofahrrad die erfindungsgemäße Vorrichtung oder eine bevorzugte Ausführungsform der erfindungsgemäßen Vorrichtung und das Antriebsrad auf, das die Radnabe aufweist. Dabei ist bevorzugt, dass Radachse verdrehfest gegen den Rahmen des Elektrofahrrads befestigt ist, d.h. nicht relativ zu dem Rahmen rotieren kann. Bei dem Antriebsrad kann es sich um das vordere Laufrad oder das hintere Laufrad des Elektrofahrrads handeln. Das Elektrofahrrad kann beispielhaft auch ein Pedelec sein. Das Pedelec ist eine Ausführung des Elektrofahrrads, bei der der Elektromotor Drehmoment abgibt, wenn ein Fahrer gleichzeitig selbst in die Pedale tritt.

Im Folgenden wird anhand der beigefügten schematischen Zeichnungen die Erfindung näher erläutert.
Figur 1 zeigt ein Magnetfeldsensorsignal und ein dazugehöriges Radnabensignal.
Figur 2 zeigt ein beispielhaftes Ablaufdiagramm zum Erzeugen des Radnabensignals und zum Steuern eines Elektromotors.
Figur 3 zeigt eine Auftragung zum Bestimmen einer aktuellen Maximalleistung P_{akt,max}.
Figur 4 zeigt eine Auftragung zum Regeln des Elektromotors.
Figur 5 zeigt eine beispielhafte elektronische Schaltung.
Figur 6 zeigt einen Längsschnitt durch eine Radnabe.

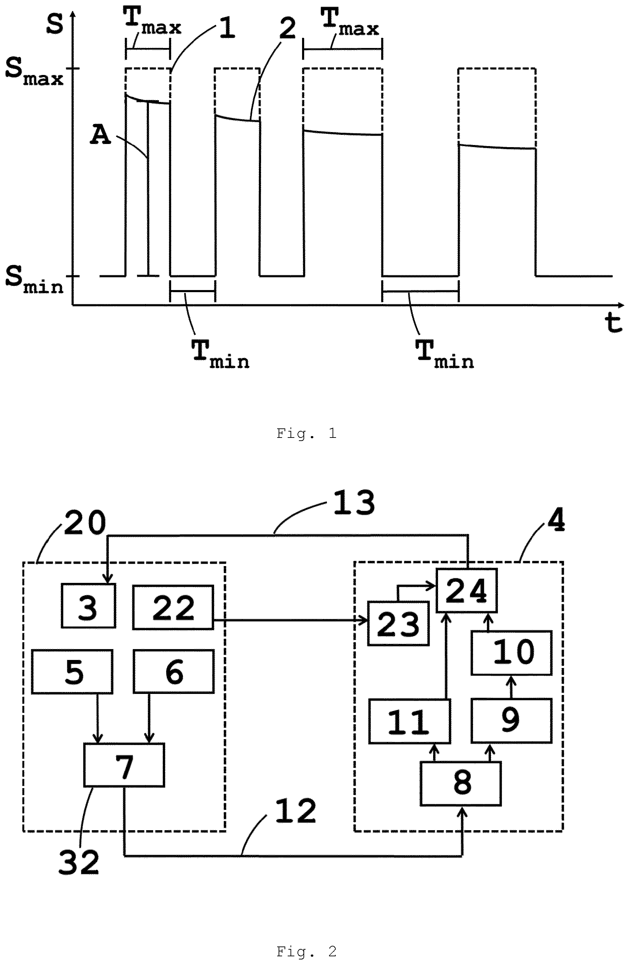

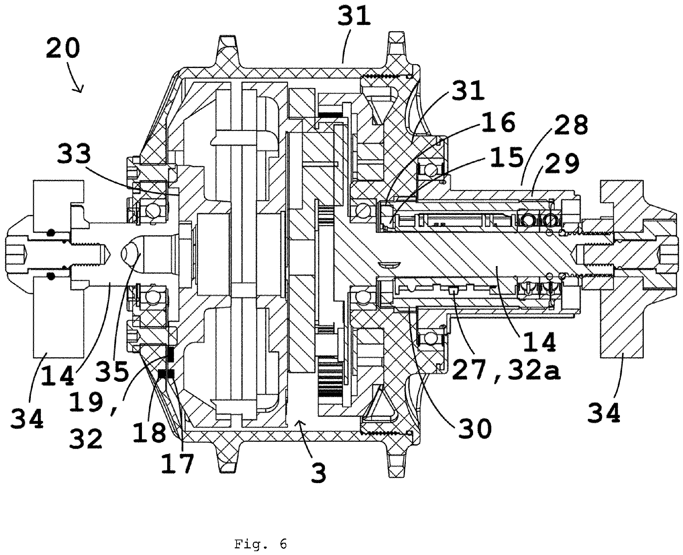

Wie es aus Figur 6 ersichtlich ist, weist eine Radnabe 20 für ein Antriebsrad eines Fahrzeugs eine Radachse 14, einen ersten Magnetfeldsensor 15, der verdrehfest gegen die Radachse 14 befestigt ist, einen ersten Magneten 16, der in einem Abstand zu dem ersten Magnetfeldsensor 15 angeordnet sowie rotierbar relativ zu der Radachse 14 gelagert ist, einen eine erste Messgröße bestimmenden ersten Sensor, der ein Temperatursensor 19, der eingerichtet ist, als die erste Messgröße eine Temperatur T in der Radnabe 20 zu messen, oder ein Drehmomentsensor 27 ist, der eingerichtet ist, als die erste Messgröße ein Drehmoment M in der Radnabe 20 zu messen, und eine erste Signalverarbeitungseinheit 32 auf. Figur 1 zeigt, dass der erste Magnetfeldsensor 15 eingerichtet ist, ein von dem ersten Magneten 16 ausgehendes erstes Magnetfeld zu detektieren und ein erstes Magnetfeldsensorsignal 1 auszugeben, das eine zeitabhängige Signalstärke S aufweist, die verursacht von einer Ortsverschiebung des ersten Magnetfeldes zwischen einer minimalen Signalstärke Sₘᵢₙ und einer maximalen Signalstärke Sₘₐₓ alterniert. Die Signalverarbeitungseinheit 32 ist eingerichtet, die minimale Signalstärke Sₘᵢₙ und/oder die maximale Signalstärke Sₘₐₓ des ersten Magnetfeldsensorsignals 1 in Abhängigkeit von der ersten Messgröße zu verändern und somit aus dem ersten Magnetfeldsensorsignal 1 ein erstes Radnabensignal 2 zu generieren.

Dadurch, dass der erste Magnetfeldsensor 15 verdrehfest gegen die Radachse 14 befestigt ist, kann der erste Magnetfeldsensor 15 nicht relativ zu der Radachse 14 rotieren. Die Radnabe 20 kann einen ersten Polring 16 aufweisen, der konzentrisch um die Radachse 14 angeordnet ist und in dem der erste Magnet 16 angeordnet ist. Der erste Polring 16 weist abwechselnd in seiner Umfangsrichtung magnetische Nordpole und magnetische Südpole auf. Prinzipiell kann die Erfindung mit einem einzelnen der Nordpole und einem einzelnen der Südpole ausgeführt werden, wobei die Genauigkeit der Messung der Bewegung des ersten Polrings 16 relativ zu der Radachse 14 jedoch höher ist, wenn eine Mehrzahl der Nordpole und der Südpole vorgesehen ist. Die Signalstärke S kann zwischen der minimalen Signalstärke Sₘᵢₙ und der maximalen Signalstärke Sₘₐₓ alternieren, indem der erste Magnetfeldsensor 15 einen Wechsel des ersten Magnetfeldes von einem Nordpol zu einem Südpol und von einem Südpol zu einem Nordpol detektiert.

Figur 1 zeigt in einer Auftragung der Signalstärke S gegen die Zeit t, dass das erste Magnetfeldsensorsignal 1 ein digitales Signal sein kann, das zwischen der minimalen Signalstärke Sₘᵢₙ und der maximalen Signalstärke Sₘₐₓ alterniert. Das Alternieren zwischen Sₘᵢₙ und Sₘₐₓ wird dabei von dem Wechsel des ersten Magnetfeldes von dem Nordpol zu dem Südpol und von dem Südpol zu dem Nordpol oder von einer Anwesenheit zu einer Abwesenheit und von einer Abwesenheit zu einer Anwesenheit des ersten Magnetfeldes verursacht. In Figur 1 ist mit Tₘᵢₙ eine Zeitdauer bezeichnet, während der das erste Magnetfeld mit einer ersten Richtung detektiert wird, d.h. mit dem Nordpol oder mit dem Südpol, oder während der eines der Anwesenheit oder der Abwesenheit des ersten Magnetfeldes detektiert wird. Zudem bezeichnet Tₘₐₓ eine Zeitdauer, während der das erste Magnetfeld mit einer zweiten Richtung detektiert wird, die der ersten Richtung entgegen gerichtet ist, d.h. mit dem anderen von dem Nordpol oder dem Südpol, oder während der das andere der Anwesenheit oder der Abwesenheit des ersten Magnetfeldes detektiert wird. In Figur 1 sind zwei unterschiedliche lange Zeitdauern Tₘᵢₙ und zwei unterschiedlich lange Zeitdauern Tₘₐₓ eingezeichnet, wobei die längeren Zeitdauern Tₘᵢₙ und Tₘₐₓ zu einer niedrigeren Drehzahl des ersten Magneten 16 um die Radachse 14 als die kürzeren Zeitdauern Tₘᵢₙ und Tₘₐₓ gehören. Bei der Signalstärke S kann es sich um eine elektrische Spannung und/oder um eine elektrische Stromstärke handeln.

Wie es aus Figur 1 ersichtlich ist, unterscheidet sich das erste Radnabensignal 2 von dem ersten Magnetfeldsensorsignal 1 nur hinsichtlich der Amplitude A der Signalstärke S, wohingegen die Zeitdauern Tₘᵢₙ und Tₘₐₓ identisch sind. Beispielsweise durch ein Bestimmen der Zeitdauern Tₘᵢₙ und/oder Tₘₐₓ oder durch ein Zählen der Wechsel pro Zeiteinheit ist es möglich, aus dem ersten Radnabensignal 2 auf die Drehzahl des ersten Magneten 16 um die Radachse 14 zu schließen. Gleichzeitig kann aus der Amplitude A auf die erste Messgröße zurückgeschlossen werden. Dabei ist denkbar, dass die Amplitude A während den Zeitdauern Tₘᵢₙ und/oder den Zeitdauer Tₘₐₓ variiert. Zudem ist denkbar, dass die Signalverarbeitungseinheit 32 eingerichtet ist, die minimale Signalstärke Sₘᵢₙ und/oder die maximale Signalstärke Sₘₐₓ des ersten Magnetfeldsensorsignals 1 so zu verändern, dass die Amplitude A immer oberhalb eines Schwellenwerts bleibt. Der Schwellenwert kann nun so hoch gewählt sein, dass die Amplitude A ausreichend hoch bleibt, dass die Drehzahl des ersten Magneten 16 um die Radachse 14 immer bestimmt werden kann.

Figur 1 zeigt, dass die erste Signalverarbeitungseinheit 32 eingerichtet sein kann, lediglich die maximale Signalstärke Sₘₐₓ zu verändern. Dabei ist denkbar, dass die erste Signalverarbeitungseinheit 32 eingerichtet ist, die maximale Signalstärke Sₘₐₓ zu verringern. Zudem ist denkbar, dass die minimale Signalstärke Sₘᵢₙ sowohl des ersten Magnetfeldsensorsignals 1 als auch des ersten Radnabensignals 2 Null beträgt.

Wie es aus Figur 6 ersichtlich ist, kann die Radnabe 20 einen Ritzelträger 28, einen Freilauf 30, ein Nabengehäuse 31 und einen Übertragungspfad aufweisen, via den in einem Betrieb der Radnabe 20 das Drehmoment M von dem Ritzelträger 28 via den Freilauf 30 auf das Nabengehäuse 31 übertragen wird. Der erste Magnet 16, insbesondere der erste Polring 16, ist verdrehfest gegen den Ritzelträger 28 angeordnet, d.h. der erste Magnet 16, insbesondere der erste Polring 16, rotiert zusammen mit dem Ritzelträger 28 um die Radachse 14. Alternativ ist denkbar, dass der erste Magnet 16, insbesondere der erste Polring 16, verdrehfest gegen das Nabengehäuse 31 angeordnet ist, d.h. der erste Magnet 16, insbesondere der erste Polring 16, rotiert zusammen mit dem Nabengehäuse 31 um die Radachse 14.

Figur 2 zeigt ein beispielhaftes Ablaufdiagramm für eine beispielhafte Vorrichtung, die die Radnabe 20 und eine Recheneinheit 4 aufweist, die eingerichtet ist, die erste Messgröße aus dem ersten Radnabensignal 2 zu bestimmen. Zudem kann die Vorrichtung einen Elektromotor 3 aufweisen und die Recheneinheit 4 eingerichtet sein, den Elektromotor 3 zu steuern. In Figur 2 ist in dem Ablaufdiagramm dargestellt, wie der Elektromotor 3 gesteuert werden kann, wobei die Schritte, die in der Radnabe 20 durchgeführt werden, in dem linken gestrichelten Rechteck und die Schritte, die in der Recheneinheit 4 durchgeführt werden, in dem rechten gestrichelten Rechteck dargestellt sind.

In dem Beispiel gemäß Figur 2 ist der erste Sensor der Temperatursensor 19 und die Recheneinheit 4 ist eingerichtet, die Temperatur T aus dem ersten Radnabensignal 2 zu bestimmen. Dazu wird in der Radnabe 20 in einem Schritt 5 das erste Magnetfeldsensorsignal 1 erzeugt und in einem Schritt 6 wird ein Signal des Temperatursensors 19 erzeugt. In einem Schritt 7 wird das erste Radnabensignal 2 erzeugt. Anschließend wird das erste Radnabensignal 2 in einem Schritt 12 an die Recheneinheit 4 übertragen. In einem Schritt 8 wird das erste Radnabensignal 2 ausgewertet. In einem Schritt 9 wird die Temperatur T bereitgestellt und in einem Schritt 11 wird die Drehzahl bereitgestellt.

Die Radnabe 20 kann einen Drehmomentsensor 27 aufweisen, der eingerichtet ist, ein Drehmoment M in der Radnabe 20 zu messen. Dazu wird in einem Schritt 22 ein Signal des Drehmomentsensors 27 in der Radnabe 20 erzeugt. In einem Schritt 23 wird das Drehmoment M der Recheneinheit 4 bereitgestellt. Beispielsweise kann dazu das Signal des Drehmomentsensors 27 mittels einer eigenen elektrischen Leitung an die Recheneinheit 4 übertragen werden und ohne dass in der eigenen elektrischen Leitung ein Magnetfeldsensorsignal mit übertragen wird.

Alternativ ist denkbar, dass die Radnabe 20 einen zweiten Magnetfeldsensor 17, der verdrehfest gegen die Radachse 14 befestigt ist, einen zweiten Magneten 18, der in einem Abstand zu dem zweiten Magnetfeldsensor 17 angeordnet sowie rotierbar relativ zu der Radachse 14 gelagert ist, einen eine zweite Messgröße bestimmenden zweiten Sensor, der der Drehmomentsensor 27 ist, der eingerichtet ist, als die zweite Messgröße das Drehmoment M in der Radnabe 20 zu messen, und eine zweite Signalverarbeitungseinheit 32a aufweist. Figur 1 zeigt, dass der zweite Magnetfeldsensor 17 eingerichtet ist, ein von dem zweiten Magneten 18 ausgehendes zweites Magnetfeld zu detektieren und ein zweites Magnetfeldsensorsignal 1 auszugeben, das eine zeitabhängige Signalstärke S aufweist, die verursacht von einer Ortsverschiebung des zweiten Magnetfeldes zwischen einer minimalen Signalstärke Sₘᵢₙ und einer maximalen Signalstärke Sₘₐₓ alterniert. Die Signalverarbeitungseinheit 32a ist eingerichtet, die minimale Signalstärke Sₘᵢₙ und/oder die maximale Signalstärke Sₘₐₓ des zweiten Magnetfeldsensorsignals 1 in Abhängigkeit von der zweiten Messgröße zu verändern und somit aus dem zweiten Magnetfeldsensorsignal 1 ein zweites Radnabensignal 2 zu generieren. Die Recheneinheit 4 kann dabei eingerichtet sein, das Drehmoment M aus dem zweiten Radnabensignal 2 zu bestimmen. Dadurch, dass der zweite Magnetfeldsensor 17 verdrehfest gegen die Radachse 14 befestigt ist, kann der zweite Magnetfeldsensor 17 nicht relativ zu der Radachse 14 rotieren. Die Radnabe 20 kann einen zweiten Polring 18 aufweisen, der konzentrisch um die Radachse 14 angeordnet ist und in dem der erste Magnet 16 angeordnet ist. Der zweite Polring 18 weist abwechselnd in seiner Umfangsrichtung magnetische Nordpole und magnetische Südpole auf. Prinzipiell kann die Erfindung mit einem einzelnen der Nordpole und einem einzelnen der Südpole ausgeführt werden, wobei die Genauigkeit der Messung der Bewegung des zweiten Polrings 18 relativ zu der Radachse 14 jedoch höher ist, wenn eine Mehrzahl der Nordpole und der Südpole vorgesehen ist. Wie es aus Figur 6 ersichtlich ist, kann die Radnabe 20 einen Ritzelträger 28, einen Freilauf 30, ein Nabengehäuse 31 und einen Übertragungspfad aufweisen, via den in einem Betrieb der Radnabe 20 das Drehmoment M von dem Ritzelträger 28 via den Freilauf 30 auf das Nabengehäuse 31 übertragen wird, wobei der erste Polring 16 verdrehfest gegen einem von dem Ritzelträger 28 und dem Nabengehäuse 31 und der zweite Polring 18 verdrehfest gegen das andere von dem Ritzelträger 28 und dem Nabengehäuse 31 angeordnet ist.

Figur 1 zeigt in einer Auftragung der Signalstärke S gegen die Zeit t, dass das zweite Magnetfeldsensorsignal 1 ein digitales Signal sein kann, das zwischen der minimalen Signalstärke Sₘᵢₙ und der maximalen Signalstärke Sₘₐₓ alterniert. Das Alternieren zwischen Sₘᵢₙ und Sₘₐₓ wird dabei von dem Wechsel des zweiten Magnetfeldes von dem Nordpol zu dem Südpol und von dem Südpol zu dem Nordpol oder von einer Anwesenheit zu einer Abwesenheit und von einer Abwesenheit zu einer Anwesenheit des zweiten Magnetfeldes verursacht. In Figur 1 ist mit Tₘᵢₙ eine Zeitdauer bezeichnet, während der das zweite Magnetfeld mit einer ersten Richtung detektiert wird, d.h. mit dem Nordpol oder mit dem Südpol, oder während der eines der Anwesenheit oder der Abwesenheit des zweiten Magnetfeldes detektiert wird. Zudem bezeichnet Tₘₐₓ eine Zeitdauer, während der das zweite Magnetfeld mit einer zweiten Richtung detektiert wird, die der ersten Richtung entgegen gerichtet ist, d.h. mit dem anderen von dem Nordpol oder dem Südpol, oder während der das andere der Anwesenheit oder der Abwesenheit des zweiten Magnetfeldes detektiert wird. In Figur 1 sind zwei unterschiedliche lange Zeitdauern Tₘᵢₙ und zwei unterschiedlich lange Zeitdauern Tₘₐₓ eingezeichnet, wobei die längeren Zeitdauern Tₘᵢₙ und Tₘₐₓ zu einer niedrigeren Drehzahl des zweiten Magneten 18 um die Radachse 14 als die kürzeren Zeitdauern Tₘᵢₙ und Tₘₐₓ gehören. Bei der Signalstärke S kann es sich um eine elektrische Spannung und/oder um eine elektrische Stromstärke handeln.

Wie es aus Figur 1 ersichtlich ist, unterscheidet sich das zweite Radnabensignal 2 von dem zweiten Magnetfeldsensorsignal 1 nur hinsichtlich der Amplitude A der Signalstärke S, wohingegen die Zeitdauern Tₘᵢₙ und Tₘₐₓ identisch sind. Beispielsweise durch ein Bestimmen der Zeitdauern Tₘᵢₙ und/oder Tₘₐₓ oder durch ein Zählen der Wechsel pro Zeiteinheit ist es möglich, aus dem zweiten Radnabensignal 2 auf die Drehzahl des zweiten Magneten 16 um die Radachse 14 zu schließen. Gleichzeitig kann aus der Amplitude A auf die zweite Messgröße zurückgeschlossen werden. Dabei ist denkbar, dass die Amplitude A während den Zeitdauern Tₘᵢₙ und/oder den Zeitdauer Tₘₐₓ variiert. Zudem ist denkbar, dass die Signalverarbeitungseinheit 32 eingerichtet ist, die minimale Signalstärke Sₘᵢₙ und/oder die maximale Signalstärke Sₘₐₓ des zweiten Magnetfeldsensorsignals 1 so zu verändern, dass die Amplitude A immer oberhalb eines Schwellenwerts bleibt. Der Schwellenwert kann nun so hoch gewählt sein, dass die Amplitude A ausreichend hoch bleibt, dass die Drehzahl des zweiten Magneten 18 um die Radachse 14 immer bestimmt werden kann.

Figur 1 zeigt, dass die zweite Signalverarbeitungseinheit 32a eingerichtet sein kann, lediglich die maximale Signalstärke Sₘₐₓ zu verändern. Dabei ist denkbar, dass die zweite Signalverarbeitungseinheit 32a eingerichtet ist, die maximale Signalstärke Sₘₐₓ zu verringern. Zudem ist denkbar, dass die minimale Signalstärke Sₘᵢₙ sowohl des zweiten Magnetfeldsensorsignals 1 als auch des zweiten Radnabensignals 2 Null beträgt.

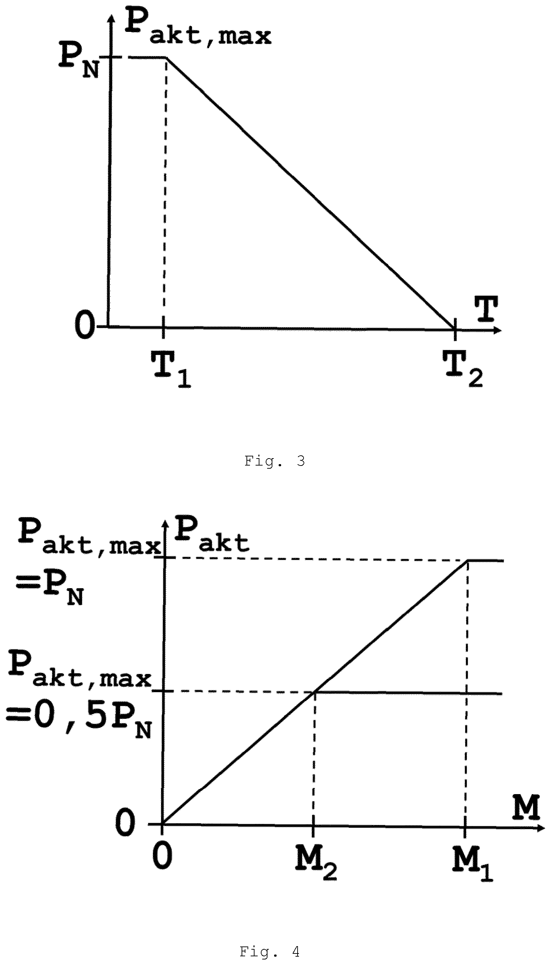

Figur 2 zeigt, dass die Recheneinheit 4 eingerichtet sein kann, eine von dem Elektromotor 3 aufzunehmende elektrische Leistung Pₐₖₜ unter Verwendung des Drehmoments M und unter Verwendung der von der Recheneinheit 4 aus dem ersten Radnabensignal 2 oder aus dem zweiten Radnabensignal 2 bestimmten Temperatur T zu steuern. Figuren 3 und 4 zeigen, wie dies beispielsweise bewerkstelligt werden kann: Der Elektromotor 3 hat eine Nennleistung P_{N}, die die maximale von dem Elektromotor 3 aufnehmbare elektrische Dauerleistung ist. Die Recheneinheit 4 ist eingerichtet, eine aktuelle Maximalleistung P_{akt,max} zu bestimmen, die eine Obergrenze für die von dem Elektromotor 3 aufzunehmende elektrische Leistung Pₐₖₜ ist (d.h. : Pₐₖₜ ≤ P_{akt,max}), wobei, wie in Figur 3 in einer Auftragung der aktuellen Maximalleistung P_{akt,max} gegen die Temperatur T dargestellt ist, gilt:
a) P_{akt,max}=P_{N}, wenn die von der Recheneinheit 4 aus dem Radnabensignal 2 bestimmte Temperatur T niedriger als eine erste Temperatur T₁ ist, d.h. T<T₁, und
b) 0<P_{akt,max}<P_{N}, wenn die von der Recheneinheit 4 aus dem Radnabensignal 2 bestimmte Temperatur T höher als die erste Temperatur T₁ und niedriger als eine zweite Temperatur T₂ ist, die höher als die erste Temperatur T₁ ist, d.h. T₁<T<T₂, und
c) P_{akt,max}=Pₐₖₜ=0, wenn die von der Recheneinheit 4 aus dem Radnabensignal 2 bestimmte Temperatur T höher als die zweite Temperatur T₂ ist, d.h. T₂<T. Dabei ist denkbar, dass sich die aktuelle Maximalleistung P_{akt,max} in dem Bereich von T₁ bis T₂ linear mit der Temperatur T verringert. Das Berechnen der aktuellen Maximalleistung P_{akt,max} kann beispielsweise in einem in Figur 2 dargestellten Schritt 10 durchgeführt werden.

In einem Schritt 24 wird die von dem Elektromotor 3 aufzunehmende elektrische Leistung Pₐₖₜ unter Verwendung einer in Figur 4 abgebildeten Auftragung der von dem Elektromotor 3 aufzunehmenden elektrischen Leistung Pₐₖₜ gegen das Drehmoment M bestimmt. Die elektrische Leistung Pₐₖₜ steigt ausgehend von dem Ursprung der Auftragung linear mit dem Drehmoment M an.

Bei Drehmomenten M, bei denen die elektrische Leistung Pₐₖₜ=P_{akt,max} ist, endet dieser lineare Anstieg und die elektrische Leistung Pₐₖₜ bleibt konstant. In Figur 4 sind zwei beispielhafte und verschiedene Fälle dargestellt, wobei in einem ersten Fall P_{akt,max}=P_{N} ist und in einem zweiten Fall P_{akt,max}=0,5*P_{N} ist. In beiden Fällen steigt die elektrische Leistung Pₐₖₜ ausgehend von dem Ursprung der Auftragung linear mit dem Drehmoment M an. In dem ersten Fall endet dieser lineare Anstieg bei einem ersten Grenzdrehmoment M₁, bei dem die zugehörige elektrische Leistung Pₐₖₜ der Nennleistung P_{N} entspricht. Bei Drehmomenten M, die höher als das erste Grenzdrehmoment M₁ sind, gilt Pₐₖₜ=P_{N}. In dem zweiten Fall endet der lineare Anstieg bei einem zweiten Grenzdrehmoment M₂, das niedriger als das erste Grenzdrehmoment M₁ ist und bei dem die zugehörige elektrische Leistung Pₐₖₜ der halben Nennleistung, d.h. 0,5*P_{N}, entspricht. Bei Drehmomenten M, die höher als das zweite Grenzdrehmoment M₂ sind, gilt Pₐₖₜ=0,5*P_{N}.

Zusätzlich kann in dem Schritt 24 die Drehzahl berücksichtigt werden. Beispielsweise kann die von dem Elektromotor 3 aufzunehmende elektrische Leistung Pₐₖₜ auf Null gesetzt werden, wenn die Drehzahl Null ist oder unter einem Schwellenwert liegt oder wenn aus dem ersten Magnetfeldsensorsignal und/oder dem zweiten Magnetfeldsensorsignal geschlossen werden kann, dass das Nabengehäuse 31 und/oder der Ritzelträger 28 rückwärts drehen. Beispielhafte Sensoren für den ersten Magnetfeldsensor 15 und/oder den zweiten Magnetfeldsensor 17, mit denen die Drehrichtung bestimmbar sind, sind die Sensoren AK8777B und AK8778B der Firma Asahi Kasei.

Schließlich wird in einem Schritt 13 die derart bestimmte Leistung Pₐₖₜ an den Elektromotor 3 übertragen, der dann die elektrische Leistung Pₐₖₜ von einem Stromspeicher bezieht.

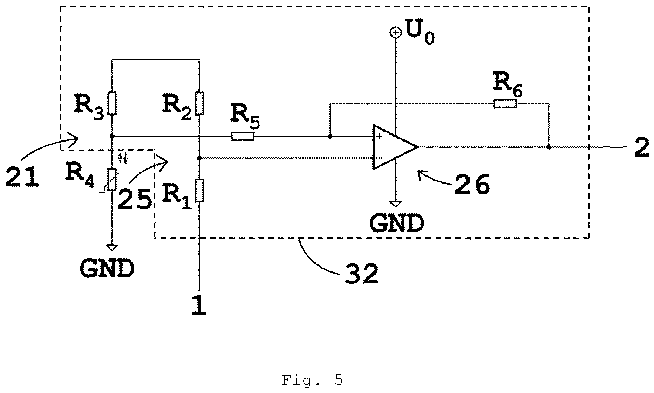

In Figur 5 ist ein Beispiel für eine elektrische Schaltung mit der ersten Signalverarbeitungseinheit 32 oder der zweiten Signalverarbeitungseinheit 32a dargestellt, wobei die erste Signalverarbeitungseinheit 32 oder die zweite Signalverarbeitungseinheit 32a innerhalb des gestrichelt umrandeten Bereichs angeordnet ist. Der erste Sensor oder der zweite Sensor ist der Temperatursensor 19, der ein Widerstandsthermometer R₄ aufweist. Die Radnabe 20 weist einen Spannungsteiler 21 auf, der in einem Betrieb der Radnabe 20 in dem Fall, dass der erste Sensor der Temperatursensor 19 ist, von dem ersten Magnetfeldsensorsignal 1 gespeist ist und in dem Fall, dass der zweite Sensor der Temperatursensor 19 ist, von dem zweiten Magnetfeldsensorsignal 1 gespeist ist, wobei einer der ohmschen Widerstände des Spannungsteilers 21 das Widerstandsthermometer R₄ ist. In dem Fall, dass der erste Sensor der Temperatursensor 19 ist, ist das erste Radnabensignal 2 eine Teilspannung des Spannungsteilers 21 oder wird das erste Radnabensignal 2 aus der Teilspannung des Spannungsteilers 21 erzeugt. In dem Fall, dass der zweite Sensor der Temperatursensor 19 ist, ist das zweite Radnabensignal 2 eine Teilspannung des Spannungsteilers 21 oder wird das zweite Radnabensignal 2 aus der Teilspannung des Spannungsteilers 21 erzeugt.

In Figur 5 ist dargestellt, dass die Radnabe 20 einen weiteren Spannungsteiler 25 aufweisen kann, der in der ersten Signalverarbeitungseinheit 32 oder der zweiten Signalverarbeitungseinheit 32a angeordnet ist. Jeder der Spannungsteiler 21, 25 ist gebildet von zwei ohmschen Widerständen. In dem Spannungsteiler 21 ist einer der ohmschen Widerstände gebildet von dem Widerstandsthermometer R₄ und der andere der ohmschen Widerstände ist gebildet von einem Widerstand R₂ und einem Widerstand R₃, die in Reihe geschaltet sind. Alternativ ist denkbar, dass der andere der ohmschen Widerstände gebildet ist von nur einem Widerstand. In dem weiteren Spannungsteiler 25 ist einer der ohmschen Widerstände gebildet von einem Widerstand R₁ und der andere der ohmschen Widerstände ist gebildet von den in Reihe geschalteten Widerständen R₂ und R₃. Alternativ ist denkbar, dass der andere der ohmschen Widerstände gebildet ist von dem nur einem Widerstand. Zwischen den beiden ohmschen Widerständen des Spannungsteilers 21 ist ein erster Knoten angeordnet und zwischen den beiden ohmschen Widerständen des weiteren Spannungsteilers 25 ist ein zweiter Knoten angeordnet. Von dem ersten Knoten und dem zweiten Knoten können die beiden Pole des ersten Radnabensignals 2 und/oder des zweiten Radnabensignals 2 abgegriffen werden oder das erste Radnabensignal 2 und/oder das zweite Radnabensignal 2 kann aus einem Signal, dass an dem ersten Knoten und dem zweiten Knoten abgegriffen wird, erzeugt werden.

Figur 5 zeigt den Fall, dass das erste Radnabensignal 2 und/oder das zweite Radnabensignal 2 aus dem Signal, dass an dem ersten Knoten und dem zweiten Knoten abgegriffen wird, erzeugt wird. Dazu weist die erste Signalverarbeitungseinheit 32 oder die zweite Signalverarbeitungseinheit 32a einen Operationsverstärker 26 auf. Der erste Knoten ist mit einem ersten Eingang des Operationsverstärkers 26 elektrisch leitfähig verbunden und der zweite Knoten ist mit einem zweiten Eingang des Operationsverstärkers 26 elektrisch leitfähig verbunden. In der elektrischen Leitung von dem ersten Knoten zu dem ersten Eingang oder in der elektrischen Leitung von dem zweiten Knoten zu dem zweiten Eingang kann ein Widerstand R₅ vorgesehen sein. Der Operationsverstärker 26 ist mit einer Versorgungsspannung U₀ gespeist. Der erste Eingang des Operationsverstärkers 26 oder der zweite Eingang des Operationsverstärkers 26 kann mit dem Ausgang des Operationsverstärkers 26 via einen Widerstand R₆ elektrisch leitfähig verbunden sein. Dadurch kann die Spannung für dem Operationsverstärker 26 nachfolgende Schaltkreise abgesenkt werden. An dem Ausgang des Operationsverstärkers 26 kann das erste Radnabensignal 2 und/oder das zweite Radnabensignal 2 abgegriffen werden. Die in Figur 5 gezeigte Erdung GND kann beispielsweise an die Radachse 14 angeschlossen sein. In einem montierten Zustand der Radachse, in dem die Radnabe 20 in einem Elektrofahrrad eingebaut ist, ist somit die Erdung GND auch elektrisch leitfähig mit einem Rahmen des Elektrofahrrads verbunden.

Figur 6 zeigt einen Längsschnitt durch eine bevorzugte Ausführungsform der Radnabe 20. Ebenfalls dargestellt ist ein Abschnitt eines Rahmens 34, an dem die beiden Längsenden der Radachse 14 fest angebracht sind, so dass die Radachse 14 nicht relativ zu dem Rahmen 34 rotieren kann. Ebenfalls erkennbar ist, dass die Radachse 14 von zwei beabstandeten Teilen gebildet sein kann, wobei beide Teile jeweils eins der beiden Längsenden aufweist und zwischen den beiden Teilen der Elektromotor 3 angeordnet ist.

Es ist denkbar, dass die Recheneinheit 4 außerhalb der Radnabe 20 angeordnet ist. Zudem ist denkbar, dass die Signalverarbeitungseinheit 32, 32a innerhalb der Radnabe 20 und insbesondere innerhalb des Nabengehäuses 31 angeordnet sein kann. Um die Signalverarbeitungseinheit 32, 32a mittels einer elektrischen Leitung mit der Recheneinheit 4 zu verbinden, kann eins der Teile der Radachse 14 einen Radachsenhohlraum 35 und ein Radachsendurchgangsloch aufweisen. Die elektrische Leitung kann via den Radachsenhohlraum 35 und das Radachsendurchgangsloch nach außerhalb der Radnabe 20 geführt sein. Beispielsweise kann sich das Radachsendurchgangsloch bis zu einer radial außenliegenden Außenfläche der Radachse 14 erstrecken.

Figur 6 zeigt, dass der Übertragungspfad, via den in einem Betrieb der Radnabe 20 das Drehmoment M von dem Ritzelträger 28 via den Freilauf 30 auf das Nabengehäuse 31 übertragen wird, gebildet sein kann von dem Ritzelträger 28, einer Übertragungshülse 29, die fest an dem Ritzelträger 28 angebracht ist, dem Freilauf 30 und dem Nabengehäuse 31, wobei der Freilauf 30 die Übertragungshülse 29 mit dem Nabengehäuse 31 kuppelt. Die Übertragungshülse 29 kann ein magnetisch codiertes Material aufweisen, dessen magnetische Eigenschaften sich unter dem Einfluss des Drehmoments M ändern. Der Drehmomentsensor 27 kann eingerichtet sein, die sich ändernden magnetischen Eigenschaften zu detektieren. Die magnetischen Eigenschaften können sich aufgrund von Magnetostriktion ändern. Aus den sich ändernden magnetischen Eigenschaften, die von dem Drehmomentsensor 27 detektiert werden, kann auf das Drehmoment M zurückgeschlossen werden.

Der Drehmomentsensor 27 kann eine Spule oder mehrere Spulen aufweisen.

Wie es aus Figur 6 ersichtlich ist, kann der erste Magnetfeldsensor 15 an der Radachse 14 befestigt sein. Der erste Magnet 16, insbesondere der erste Polring 16, kann fest an der Übertragungshülse 29 angebracht sein. Der zweite Magnet 18, insbesondere der zweite Polring 18, kann fest an dem Nabengehäuse 31 angebracht sein. Der zweite Magnetfeldsensor 17 kann an einem fest an der Radachse 14 angebrachten Bauteil befestigt sein. Der erste Magnet 16, insbesondere der erste Polring 16, und/oder der zweite Magnet 18, insbesondere der zweite Polring 18, können dabei so angeordnet sein, dass deren Rotationsachse mit der Längsachse der Radachse 14 zusammenfällt. Der Temperatursensor 19 kann an einem fest an der Radachse 14 angebrachten Bauteil befestigt sein. Die erste Signalverarbeitungseinheit 32 kann ebenfalls an dem fest an der Radachse 14 angebrachten Bauteil befestigt sein. Zudem kann die erste Signalverarbeitungseinheit 32 benachbart zu dem Temperatursensor 10 angeordnet sein. Die zweite Signalverarbeitungseinheit 32a kann an der Radachse 14 befestigt sein. Zudem kann die zweite Signalverarbeitungseinheit 32a benachbart zu dem Drehmomentsensor 27 angeordnet sein.

Ein Elektrofahrrad weist das Antriebsrad auf, das die Radnabe 2 aufweist, oder das Elektrofahrrad weist die Vorrichtung und das Antriebsrad auf, das die Radnabe 20 aufweist.

### Bezugszeichenliste

S Signalstärke
Sₘᵢₙ minimale Signalstärke
Sₘₐₓ maximale Signalstärke
t Zeit
A Amplitude
Tₘᵢₙ Zeitdauer, während der ein Magnetfeld mit einer ersten Richtung detektiert wird
Tₘₐₓ Zeitdauer, während der ein Magnetfeld mit einer zweiten Richtung detektiert wird, die der ersten Richtung entgegen gerichtet ist
T Temperatur
T₁ erste Temperatur
T₂ zweite Temperatur
Pₐₖₜ elektrische Leistung
P_{akt,max} aktuelle Maximalleistung
P_{N} Nennleistung
M Drehmoment
M₁ erstes Grenzdrehmoment
M₂ zweites Grenzdrehmoment
R₄ Widerstandsthermometer
1 Magnetfeldsensorsignal
2 Radnabensignal
3 Elektromotor
4 Recheneinheit
5 Erzeugen des ersten Magnetfeldsensorsignals 1
6 Erzeugen des Signals des Temperatursensors
7 Erzeugen des ersten Radnabensignals 2
8 Auswerten des ersten Radnabensignals 2
9 Bereitstellen der Temperatur T
10 Berechnen der aktuellen Maximalleistung P_{akt,max}
11 Bereitstellen einer Drehzahl
12 Übertragen des Radnabensignals 2 an die Recheneinheit 4
13 Übertragen der Leistung Pₐₖₜ an den Elektromotor
14 Radachse
15 erster Magnetfeldsensor
16 erster Magnet, erster Polring
17 zweiter Magnetfeldsensor
18 zweiter Magnet, zweiter Polring
19 Temperatursensor
20 Radnabe
21 Spannungsteiler
22 Erzeugen des Signals des Drehmomentsensors
23 Bereitstellen eines Drehmoments
24 Bestimmen der Leistung Pₐₖₜ
25 weiterer Spannungsteiler
26 Operationsverstärker
27 Drehmomentsensor
28 Ritzelträger
29 Übertragungshülse
30 Freilauf
31 Nabengehäuse
32 erste Signalverarbeitungseinheit
32a zweite Signalverarbeitungseinheit
33 Halter
34 Rahmen
35 Radachsenhohlraum

## Patentansprüche

1. Radnabe für ein Antriebsrad eines Fahrzeugs, mit einer Radachse (14), einem ersten Magnetfeldsensor (15), der verdrehfest gegen die Radachse (14) befestigt ist, einem ersten Magneten (16), der in einem Abstand zu dem ersten Magnetfeldsensor (15) angeordnet sowie rotierbar relativ zu der Radachse (14) gelagert ist, wobei der erste Magnetfeldsensor (15) eingerichtet ist, ein von dem ersten Magneten (16) ausgehendes erstes Magnetfeld zu detektieren und ein erstes Magnetfeldsensorsignal (1) auszugeben, das eine zeitabhängige Signalstärke (S) aufweist, die verursacht von einer Ortsverschiebung des ersten Magnetfeldes zwischen einer minimalen Signalstärke (Sₘᵢₙ) und einer maximalen Signalstärke (Sₘₐₓ) alterniert, einem eine erste Messgröße bestimmenden ersten Sensor, der ein Temperatursensor (19), der eingerichtet ist, als die erste Messgröße eine Temperatur (T) in der Radnabe (20) zu messen, oder ein Drehmomentsensor (27) ist, der eingerichtet ist, als die erste Messgröße ein Drehmoment (M) in der Radnabe (20) zu messen, die Radnabe **gekennzeichnet durch** eine erste Signalverarbeitungseinheit (32), die eingerichtet ist, die minimale Signalstärke (Sₘᵢₙ) und/oder die maximale Signalstärke (Sₘₐₓ) des ersten Magnetfeldsensorsignals (1) in Abhängigkeit von der ersten Messgröße zu verändern und somit aus dem ersten Magnetfeldsensorsignal (1) ein erstes Radnabensignal (2) zu generieren.

2. Radnabe gemäß Anspruch 1, wobei die Radnabe (20) einen Ritzelträger (28), einen Freilauf (30), ein Nabengehäuse und einen Übertragungspfad aufweist, via den in einem Betrieb der Radnabe (20) das Drehmoment (M) von dem Ritzelträger (28) via den Freilauf (30) auf das Nabengehäuse übertragen wird, wobei der erste Magnet (16) verdrehfest gegen den Ritzelträger (28) oder verdrehfest gegen das Nabengehäuse angeordnet ist.

3. Radnabe gemäß Anspruch 1 oder 2, wobei die Radnabe (20) einen zweiten Magnetfeldsensor (17), der verdrehfest gegen die Radachse (14) befestigt ist, einen zweiten Magneten (18), der in einem Abstand zu dem zweiten Magnetfeldsensor (17) angeordnet sowie rotierbar relativ zu der Radachse (14) gelagert ist, wobei der zweite Magnetfeldsensor (17) eingerichtet ist, ein von dem zweiten Magneten (18) ausgehendes zweites Magnetfeld zu detektieren und ein zweites Magnetfeldsensorsignal (1) auszugeben, das eine zeitabhängige Signalstärke (S) aufweist, die verursacht von einer Ortsverschiebung des ersten Magnetfeldes zwischen einer minimalen Signalstärke (Sₘᵢₙ) und einer maximalen Signalstärke (Sₘₐₓ) alterniert, einen eine zweite Messgröße bestimmenden zweiten Sensor, der in dem Fall, dass der erste Sensor der Drehmomentsensor (27) ist, der Temperatursensor (19) ist, der eingerichtet ist, als die zweite Messgröße die Temperatur (T) in der Radnabe (20) zu messen, und in dem Fall, dass der erste Sensor der Temperatursensor (19) ist, der Drehmomentsensor (27) ist, der eingerichtet ist, als die zweite Messgröße das Drehmoment (M) in der Radnabe (20) zu messen, und eine zweite Signalverarbeitungseinheit (32a) aufweist, die eingerichtet ist, die minimale Signalstärke (Sₘᵢₙ) und/oder die maximale Signalstärke (Sₘₐₓ) des zweiten Magnetfeldsensorsignals (1) in Abhängigkeit von der zweiten Messgröße zu verändern und somit aus dem zweiten Magnetfeldsensorsignal (1) ein zweites Radnabensignal (2) zu generieren.

4. Radnabe gemäß Anspruch 3, wobei die Radnabe (20) einen Ritzelträger (28), einen Freilauf (30), ein Nabengehäuse und einen Übertragungspfad aufweist, via den in einem Betrieb der Radnabe (20) das Drehmoment (M) von dem Ritzelträger (28) via den Freilauf (30) auf das Nabengehäuse übertragen wird, wobei der erste Magnet (16) verdrehfest gegen den Ritzelträger (28) und der zweite Magnet (18) verdrehfest gegen das Nabengehäuse angeordnet ist.

5. Radnabe gemäß einem der Ansprüche 1 bis 4, wobei die Signalstärke (S) eine elektrische Spannung und/oder eine elektrische Stromstärke ist.

6. Radnabe gemäß Anspruch 5 in Verbindung mit Anspruch 3, wobei der erste Sensor oder der zweite Sensor der Temperatursensor (19) ist, der ein Widerstandsthermometer (R₄) aufweist, und die Radnabe (20) einen Spannungsteiler (21) aufweist, der in einem Betrieb der Radnabe (20) in dem Fall, dass der erste Sensor der Temperatursensor (19) ist, von dem ersten Magnetfeldsensorsignal (1) gespeist ist und in dem Fall, dass der zweite Sensor der Temperatursensor (19) ist, von dem zweiten Magnetfeldsensorsignal (1) gespeist ist, wobei einer der ohmschen Widerstände des Spannungsteilers (21) das Widerstandsthermometer (R₄) ist.

7. Radnabe gemäß Anspruch 6, wobei in dem Fall, dass der erste Sensor der Temperatursensor (19) ist, das erste Radnabensignal (2) eine Teilspannung des Spannungsteilers (21) ist oder aus der Teilspannung des Spannungsteilers (21) erzeugt wird, und in dem Fall, dass der zweite Sensor der Temperatursensor (19) ist, das zweite Radnabensignal (2) eine Teilspannung des Spannungsteilers (21) ist oder aus der Teilspannung des Spannungsteilers (21) erzeugt wird.

8. Vorrichtung mit einer Radnabe (20) gemäß einem der Ansprüche 3 bis 7 und einer Recheneinheit (4), die eingerichtet ist, die erste Messgröße aus dem ersten Radnabensignal (2) zu bestimmen, und insbesondere eingerichtet ist, die zweite Messgröße aus dem zweiten Radnabensignal (2) zu bestimmen.

9. Vorrichtung gemäß Anspruch 8, wobei die Radnabe (20) einen Elektromotor (3) aufweist und die Recheneinheit (4) eingerichtet ist, den Elektromotor (3) zu steuern.

10. Vorrichtung gemäß Anspruch 8 oder 9, wobei die Radnabe (20) einen Drehmomentsensor (27) als den ersten Sensor oder als den zweiten Sensor aufweist, der eingerichtet ist, ein Drehmoment (M) in der Radnabe (20) zu messen.

11. Vorrichtung gemäß einem der Ansprüche 9 oder 10 in Verbindung mit 9, wobei die Vorrichtung eingerichtet ist, das Drehmoment (M) der Recheneinheit (4) bereitzustellen, die eingerichtet ist, eine von dem Elektromotor (3) aufzunehmende elektrische Leistung Pₐₖₜ unter Verwendung des Drehmoments (M) zu steuern.

12. Vorrichtung gemäß einem der Ansprüche 8 bis 11, wobei, wenn der erste Sensor der Drehmomentsensor (27) ist, die Recheneinheit (4) eingerichtet ist, das Drehmoment (M) aus dem ersten Radnabensignal (2) zu bestimmen, oder wobei, wenn der zweite Sensor der Drehmomentsensor (27) ist, die Recheneinheit (4) eingerichtet ist, das Drehmoment (M) aus dem zweiten Radnabensignal (2) zu bestimmen.

13. Vorrichtung gemäß einem der Ansprüche 8 bis 12, wobei, wenn der erste Sensor der Temperatursensor (19) ist, die Recheneinheit (4) eingerichtet ist, die Temperatur (T) aus dem ersten Radnabensignal (2) zu bestimmen, oder wobei, wenn der zweite Sensor der Temperatursensor (19) ist, die Recheneinheit (4) eingerichtet ist, die Temperatur (T) aus dem zweiten Radnabensignal (2) zu bestimmen.

14. Vorrichtung gemäß Anspruch 13 in Verbindung mit Anspruch 9, wobei die Recheneinheit (4) eingerichtet ist, eine von dem Elektromotor (3) aufzunehmende elektrische Leistung Pₐₖₜ unter Verwendung der von der Recheneinheit (4) aus dem ersten Radnabensignal (2) oder aus dem zweiten Radnabensignal (2) bestimmten Temperatur (T) zu steuern.

15. Vorrichtung gemäß Anspruch 13 in Verbindung mit Anspruch 9 oder 14 in Verbindung mit Anspruch 9, wobei der Elektromotor (3) eine Nennleistung P_{N} hat, die die maximale von dem Elektromotor (3) aufnehmbare elektrische Dauerleistung ist, und die Recheneinheit (4) eingerichtet ist, eine aktuelle Maximalleistung P_{akt,max} zu bestimmen, die eine Obergrenze für die von dem Elektromotor (3) aufzunehmende elektrische Leistung Pₐₖₜ ist, wobei gilt:
a) P_{akt,max}=P_{N}, wenn die von der Recheneinheit (4) aus dem Radnabensignal (2) bestimmte Temperatur (T) niedriger als eine erste Temperatur (T₁) ist, und
b) 0<P_{akt,max}<P_{N}, wenn die von der Recheneinheit (4) aus dem Radnabensignal (2) bestimmte Temperatur (T) höher als die erste Temperatur (T₁) und niedriger als eine zweite Temperatur (T₂) ist, die höher als die erste Temperatur (T₁) ist, und
c) P_{akt,max}=Pₐₖₜ=0, wenn die von der Recheneinheit (4) aus dem Radnabensignal (2) bestimmte Temperatur (T) höher als die zweite Temperatur (T₂) ist.

16. Vorrichtung gemäß einem der Ansprüche 8 bis 15, wobei die Recheneinheit (4) außerhalb der Radnabe (20) angeordnet ist.

17. Elektrofahrrad mit einer Radnabe (20) gemäß einem der Ansprüche 1 bis 7 und dem Antriebsrad, das die Radnabe (20) aufweist, oder mit einer Vorrichtung gemäß einem der Ansprüche 8 bis 16 und dem Antriebsrad, das die Radnabe (20) aufweist.

## Claims

1. A wheel hub for a drive wheel of a vehicle, comprising a wheel axle (14), a first magnetic field sensor (15), which is fixed to the wheel axle (14) in a torsion-proof manner, a first magnet (16), which is arranged at a distance from the first magnetic field sensor (15) and is mounted so as to be rotatable relative to the wheel axle (14), the first magnetic field sensor (15) being designed for detecting a first magnetic field emanating from the first magnet (16) and outputting a first magnetic field sensor signal (1) having a time-dependent signal strength (S) which, caused by a spatial displacement of the first magnetic field, alternates between a minimum signal strength (Sₘᵢₙ) and a maximum signal strength (Sₘₐₓ), a first sensor determining a first measured variable, which is a temperature sensor (19) designed for measuring a temperature (T) in the wheel hub (20) as the first measured variable, or a torque sensor (27) designed for measuring a torque (M) in the wheel hub (20) as the first measured variable, the wheel hub being **characterized by** a first signal processing unit (32) designed for changing the minimum signal strength (Sₘᵢₙ) and/or the maximum signal strength (Sₘₐₓ) of the first magnetic field sensor signal (1) as a function of the first measured variable and thus for generating a first wheel hub signal (2) from the first magnetic field sensor signal (1).

2. The wheel hub according to claim 1, wherein the wheel hub (20) has a pinion carrier (28), a freewheel (30), a hub housing and a transmission path via which, during operation of the wheel hub (20), the torque (M) is transmitted from the pinion carrier (28) via the freewheel (30) to the hub housing, the first magnet (16) being arranged so as to be non-rotatable relative to the pinion carrier (28) or non-rotatable relative to the hub housing.

3. The wheel hub according to claim 1 or 2, wherein the wheel hub (20) has a second magnetic field sensor (17), which is non-rotatably fixed to the wheel axle (14), a second magnet (18), which is arranged at a distance from the second magnetic field sensor (17) and is mounted so as to be rotatable relative to the wheel axle (14), the second magnetic field sensor (17) being designed for detecting a second magnetic field emanating from the second magnet (18) and outputting a second magnetic field sensor signal (1) having a time-dependent signal strength (S) which, caused by a spatial displacement of the first magnetic field, alternates between a minimum signal strength (Sₘᵢₙ) and a maximum signal strength (Sₘₐₓ), a second sensor determining a second measured variable, which, in case that the first sensor is the torque sensor (27), is the temperature sensor (19), which is designed for measuring the temperature (T) in the wheel hub (20) as the second measured variable, and, in case that the first sensor is the temperature sensor (19), is the torque sensor (27), which is designed for measuring the torque (M) in the wheel hub (20) as the second measured variable, and comprises a second signal processing unit (32a) which is designed for changing the minimum signal strength (Sₘᵢₙ) and/or the maximum signal strength (Sₘₐₓ) of the second magnetic field sensor signal (1) as a function of the second measured variable and thus for generating a second wheel hub signal (2) from the second magnetic field sensor signal (1).

4. The wheel hub according to claim 3, wherein the wheel hub (20) has a pinion carrier (28), a freewheel (30), a hub housing and a transmission path via which, during operation of the wheel hub (20), the torque (M) is transmitted from the pinion carrier (28) via the freewheel (30) to the hub housing, the first magnet (16) being arranged so as to be non-rotatable relative to the pinion carrier (28) and the second magnet (18) being arranged so as to be non-rotatable relative to the hub housing.

5. The wheel hub according to any one of claims 1 to 4, wherein the signal strength (S) is an electrical voltage and/or an electrical current intensity.

6. The wheel hub according to claim 5 in conjunction with claim 3, wherein the first sensor or the second sensor is the temperature sensor (19) comprising a resistance thermometer (R₄), and the wheel hub (20) comprises a voltage divider (21) which, during operation of the wheel hub (20) in case that the first sensor is the temperature sensor (19), is fed by the first magnetic field sensor signal (1), and in case that the second sensor is the temperature sensor (19), is fed by the second magnetic field sensor signal (1), one of the ohmic resistances of the voltage divider (21) being the resistance thermometer (R4) .

7. The wheel hub according to claim 6, wherein in case that the first sensor is the temperature sensor (19), the first wheel hub signal (2) is a partial voltage of the voltage divider (21) or is generated from the partial voltage of the voltage divider (21), and in case that the second sensor is the temperature sensor (19), the second wheel hub signal (2) is a partial voltage of the voltage divider (21) or is generated from the partial voltage of the voltage divider (21).

8. A device comprising a wheel hub (20) according to any one of claims 3 to 7 and a computing unit (4) which is designed for determining the first measured variable from the first wheel hub signal (2), and in particular is designed for determining the second measured variable from the second wheel hub signal (2) .

9. The device according to claim 8, wherein the wheel hub (20) comprises an electric motor (3) and the computing unit (4) is arranged for controlling the electric motor (3).

10. The device according to claim 8 or 9, wherein the wheel hub (20) comprises a torque sensor (27) as the first sensor or as the second sensor, which is designed for measuring a torque (M) in the wheel hub (20).

11. The device according to any one of claims 9 or 10 in conjunction with claim 9, wherein the device is designed for providing the torque (M) to the computing unit (4) designed for controlling an electric power Pₐₖₜ to be absorbed by the electric motor (3) using the torque (M).

12. The device according to any one of claims 8 to 11, wherein, if the first sensor is the torque sensor (27), the computing unit (4) is designed for determining the torque (M) from the first wheel hub signal (2), or wherein, if the second sensor is the torque sensor (27), the computing unit (4) is designed for determining the torque (M) from the second wheel hub signal (2).

13. The device according to any one of claims 8 to 12, wherein, if the first sensor is the temperature sensor (19), the computing unit (4) is designed for determining the temperature (T) from the first wheel hub signal (2), or wherein, if the second sensor is the temperature sensor (19), the computing unit (4) is designed for determining the temperature (T) from the second wheel hub signal (2).

14. The device according to claim 13 in conjunction with claim 9, wherein the computing unit (4) is designed for controlling an electric power Pₐₖₜ to be absorbed by the electric motor (3) using the temperature (T) determined by the computing unit (4) from the first wheel hub signal (2) or from the second wheel hub signal (2).

15. The device according to claim 13 in conjunction with claim 9 or according to claim 14 in conjunction with claim 9, wherein the electric motor (3) has a rated power P_{N} which is the maximum continuous electrical power that can be absorbed by the electric motor (3), and the computing unit (4) is designed for determining a momentary maximum power P_{akt,max} which is an upper limit for the electrical power Pₐₖₜ to be absorbed by the electric motor (3), where the following applies:
a) P_{akt,max}=P_{N}, if the temperature (T) determined by the computing unit (4) from the wheel hub signal (2) is lower than a first temperature (T₁), and
b) 0<P_{akt,max}<P_{N}, if the temperature (T) determined by the computing unit (4) from the wheel hub signal (2) is higher than the first temperature (T₁) and lower than a second temperature (T₂) which is higher than the first temperature (T₁), and
c) P_{akt,max}=Pₐₖₜ=0, if the temperature (T) determined by the computing unit (4) from the wheel hub signal (2) is higher than the second temperature (T₂).

16. The device according to any one of claims 8 to 15, wherein the computing unit (4) is arranged outside the wheel hub (20) .

17. An electric bicycle comprising a wheel hub (20) according to any one of claims 1 to 7 and a drive wheel comprising the wheel hub (20), or comprising a device according to any one of claims 8 to 16 and a drive wheel comprising the wheel hub (20).

## Revendications

1. Moyeu de roue pour une roue motrice d'un véhicule, comprenant un axe de roue (14), un premier capteur de champ magnétique (15), qui est fixé à l'axe de roue (14) de manière à ne pas pouvoir tourner par rapport à celui-ci, un premier aimant (16), qui est disposé à une certaine distance du premier capteur de champ magnétique (15) et qui est monté de manière à pouvoir tourner par rapport à l'axe de roue (14), le premier capteur de champ magnétique (15) étant conçu pour détecter un premier champ magnétique émanant du premier aimant (16) et émettre un premier signal de capteur de champ magnétique (1) ayant une intensité de signal (S) dépendante du temps qui, en raison d'un déplacement spatial du premier champ magnétique, alterne entre une intensité de signal minimale (Sₘᵢₙ) et une intensité de signal maximale (Sₘₐₓ), un premier capteur déterminant une première variable mesurée, qui est un capteur de température (19) conçu pour mesurer une température (T) dans le moyeu de roue (20) en tant que première variable mesurée, ou est un capteur de couple (27) conçu pour mesurer un couple (M) dans le moyeu de roue (20) en tant que première variable mesurée, le moyeu de roue étant **caractérisé par** une première unité de traitement de signal (32) conçue pour modifier l'intensité minimale du signal (Sₘᵢₙ) et/ou l'intensité maximale du signal (Sₘₐₓ) du premier signal de capteur de champ magnétique (1) en fonction de la première variable mesurée et donc pour générer un premier signal de moyeu de roue (2) à partir du premier signal de capteur de champ magnétique (1).

2. Le moyeu de roue selon la revendication 1, sachant que le moyeu de roue (20) comprend un porte-pignon (28), une roue libre (30), un carter de moyeu et une voie de transmission par laquelle, pendant le fonctionnement du moyeu de roue (20), le couple (M) est transmis du porte-pignon (28) au carter de moyeu via la roue libre (30), le premier aimant (16) étant disposé de manière à ne pas pouvoir tourner par rapport au porte-pignon (28) ou à ne pas pouvoir tourner par rapport au carter de moyeu.

3. Le moyeu de roue selon la revendication 1 ou 2, sachant que le moyeu de roue (20) comprend un deuxième capteur de champ magnétique (17), qui est fixé de manière à ne pas pouvoir tourner par rapport à l'axe de roue (14), un deuxième aimant (18), qui est disposé à une certaine distance du deuxième capteur de champ magnétique (17) et qui est monté de manière à pouvoir tourner par rapport à l'axe de roue (14), le deuxième capteur de champ magnétique (17) étant conçu pour détecter un deuxième champ magnétique émanant du deuxième aimant (18) et émettre un deuxième signal de capteur de champ magnétique (1) ayant une intensité de signal (S) dépendant du temps qui, en raison d'un déplacement spatial du premier champ magnétique, alterne entre une intensité de signal minimale (Sₘᵢₙ) et une intensité de signal maximale (Sₘₐₓ), un deuxième capteur déterminant une deuxième variable mesurée, qui, dans le cas où le premier capteur est le capteur de couple (27), est le capteur de température (19), conçu pour mesurer la température (T) dans le moyeu de roue (20) en tant que deuxième variable mesurée, et, dans le cas où le premier capteur est le capteur de température (19), est le capteur de couple (27), conçu pour mesurer le couple (M) dans le moyeu de roue (20) en tant que deuxième variable mesurée, et comprend une deuxième unité de traitement de signal (32a) conçue pour modifier l'intensité minimale du signal (Sₘᵢₙ) et/ou l'intensité maximale du signal (Sₘₐₓ) du deuxième signal de capteur de champ magnétique (1) en fonction de la deuxième variable mesurée et donc pour générer un deuxième signal de moyeu de roue (2) à partir du deuxième signal de capteur de champ magnétique (1).

4. Le moyeu de roue selon la revendication 3, sachant que le moyeu de roue (20) comprend un porte-pignon (28), une roue libre (30), un carter de moyeu et une voie de transmission par laquelle, pendant le fonctionnement du moyeu de roue (20), le couple (M) est transmis du porte-pignon (28) au carter de moyeu via la roue libre (30), le premier aimant (16) étant disposé de manière à ne pas pouvoir tourner par rapport au porte-pignon (28) et le deuxième aimant (18) étant disposé de manière à ne pas pouvoir tourner par rapport au carter du moyeu.

5. Le moyeu de roue selon l'une quelconque des revendications 1 à 4, sachant que l'intensité du signal (S) est une tension électrique et/ou une intensité de courant électrique.

6. Le moyeu de roue selon la revendication 5 en liaison avec la revendication 3, sachant que le premier capteur ou le deuxième capteur est le capteur de température (19) comprenant un thermomètre à résistance (R₄), et le moyeu de roue (20) comprend un diviseur de tension (21) qui, pendant le fonctionnement du moyeu de roue (20), dans le cas où le premier capteur est le capteur de température (19), est alimenté par le premier signal de capteur de champ magnétique (1), et dans le cas où le deuxième capteur est le capteur de température (19), est alimenté par le deuxième signal de capteur de champ magnétique (1), l'une des résistances ohmiques du diviseur de tension (21) étant le thermomètre à résistance (R₄).

7. Le moyeu de roue selon la revendication 6, sachant que, dans le cas où le premier capteur est le capteur de température (19), le premier signal de moyeu de roue (2) est une tension partielle du diviseur de tension (21) ou est généré à partir de la tension partielle du diviseur de tension (21), et dans le cas où le deuxième capteur est le capteur de température (19), le deuxième signal de moyeu de roue (2) est une tension partielle du diviseur de tension (21) ou est généré à partir de la tension partielle du diviseur de tension (21).

8. Dispositif comprenant un moyeu de roue (20) selon l'une quelconque des revendications 3 à 7 et une unité de calcul (4) qui est conçue pour déterminer la première variable mesurée à partir du premier signal de moyeu de roue (2), et en particulier conçue pour déterminer la deuxième variable mesurée à partir du deuxième signal de moyeu de roue (2).

9. Le dispositif selon la revendication 8, sachant que le moyeu de roue (20) comprend un moteur électrique (3) et l'unité de calcul (4) est conçue pour commander le moteur électrique (3) .

10. Le dispositif selon la revendication 8 ou 9, sachant que le moyeu de roue (20) comprend un capteur de couple (27) comme premier capteur ou comme deuxième capteur, qui est conçu pour mesurer un couple (M) dans le moyeu de roue (20).

11. Le dispositif selon l'une quelconque des revendications 9 ou 10 en liaison avec la revendication 9, sachant que le dispositif est conçu pour fournir le couple (M) à l'unité de calcul (4) qui est conçue pour contrôler une puissance électrique Pₐₖₜ devant être absorbée par le moteur électrique (3) en utilisant le couple (M).

12. Le dispositif selon l'une des revendications 8 à 11, sachant que, si le premier capteur est le capteur de couple (27), l'unité de calcul (4) est conçue pour déterminer le couple (M) à partir du premier signal de moyeu de roue (2), ou sachant que, si le deuxième capteur est le capteur de couple (27), l'unité de calcul (4) est conçue pour déterminer le couple (M) à partir du deuxième signal de moyeu de roue (2).

13. Le dispositif selon l'une des revendications 8 à 12, sachant que, si le premier capteur est le capteur de température (19), l'unité de calcul (4) est conçue pour déterminer la température (T) à partir du premier signal de moyeu de roue (2), ou sachant que, si le deuxième capteur est le capteur de température (19), l'unité de calcul (4) est conçue pour déterminer la température (T) à partir du deuxième signal de moyeu de roue (2).

14. Le dispositif selon la revendication 13 en liaison avec la revendication 9, sachant que l'unité de calcul (4) est conçue pour contrôler une puissance électrique Pₐₖₜ devant être absorbée par le moteur électrique (3) en utilisant la température (T) déterminée par l'unité de calcul (4) à partir du premier signal de moyeu de roue (2) ou du deuxième signal de moyeu de roue (2).

15. Le dispositif selon la revendication 13 en liaison avec la revendication 9 ou selon la revendication 14 en liaison avec la revendication 9, sachant que le moteur électrique (3) a une puissance nominale P_{N} qui est la puissance électrique continue maximale qui peut être absorbée par le moteur électrique (3), et l'unité de calcul (4) est conçue pour déterminer une puissance maximale momentanée P_{akt,max} qui est une limite supérieure pour la puissance électrique Pₐₖₜ devant être absorbée par le moteur électrique (3), où ce qui suit s'applique :
a) P_{akt,max}=P_{N}, si la température (T) déterminée par l'unité de calcul (4) à partir du signal de moyeu de roue (2) est inférieure à une première température (T₁), et
b) 0<P_{akt,max}<P_{N}, si la température (T) déterminée par l'unité de calcul (4) à partir du signal de moyeu de roue (2) est supérieure à la première température (T₁) et inférieure à une deuxième température (T₂) qui est supérieure à la première température (T₁), et
c) P_{akt,max}=Pₐₖₜ=0, si la température (T) déterminée par l'unité de calcul (4) à partir du signal de moyeu de roue (2) est supérieure à la deuxième température (T₂).

16. Le dispositif selon l'une quelconque des revendications 8 à 15, sachant que l'unité de calcul (4) est disposée à l'extérieur du moyeu de roue (20).

17. Vélo électrique comprenant un moyeu de roue (20) selon l'une quelconque des revendications 1 à 7 et une roue motrice comprenant le moyeu de roue (20), ou comprenant un dispositif selon l'une quelconque des revendications 8 à 16 et une roue motrice comprenant le moyeu de roue (20).
